# EUROPEAN PATENT APPLICATION

(11) **EP 1 117 257 A2**
(43) Date of publication of application: **18.07.2001**
(21) Application number: 01300220.9
(22) Date of filing: 11.01.2001
(51) Int. Cl.: H04N 7/173, H04N 7/16

(54) **Method and system for enabling real-time interactive e-commerce transactions**

(30) Priority: 11.01.2000 US 481051
(71) Applicant: International Business Machines Corporation, Armonk, NY 10504 (US)
(72) Inventor: Zetts, John M., IBM United Kingdom Ltd., Winchester, Hampshire SO21 2JN (GB)
(74) Representative: Jennings, Michael John

(57) **Abstract**

Aspects for enabling real-time interactive e-commerce transactions over television systems are described. The aspects include forming interactive icon data for a program. A time for broadcasting the program during a broadcast is detected. The interactive icon data is then decoded substantially simultaneously with compressed encoding of the program for real-time insertion of the interactive icon data with the program.

## Description

### FIELD OF THE INVENTION

The present invention relates generally to enabling e-commerce at cable headends, and more particularly to enabling real-time interactive e-commerce transactions.

### BACKGROUND OF THE INVENTION

Interactive television (ITV) systems require a network architecture which supplies an "upstream" (from a user to a head end) and a "downstream" (from the head end to the user) channel to each user of the system. Commonly, the downstream channel has been the TV broadcast, satellite, or cable medium, while the upstream channel has used the public service telephone network or the return channel provided by hybrid fiber cable (HFC) technology. Typical ITV applications have included viewer polling, home shopping, and distance learning. These applications were frequently menu-based and static, i.e., a modest number of choices in a given category were pre-programmed into the system and offered to users.

In advancing the interactive nature of these systems, embedding multimedia data into compressed digital video/audio streams has enabled a variety of interactive applications, including interactive TV commercials. For example, co-pending U.S. Patent Applications entitled "A DATA ANNOTATION SYSTEM FOR DIGITAL VIDEO STREAMS" (USSN 09/032491, IBM Docket YO998068) and "A SYSTEM FOR TWO-WAY DIGITAL MULTIMEDIA BROADCAST AND INTERACTIVE SERVICES" (USSN 09/968404, IBM Docket YO997398), assigned to the assignee of the present invention, teach methods of embedding multimedia data into compressed, digital video/audio files.

Enabling the interactivity of commercial spots, as taught in these applications, require considerable integration at the cable headends. The difficulty of integrating these new interactive systems can be appreciated by contrasting current headend infrastructure and operations with the changes needed to deploy these prior art systems.

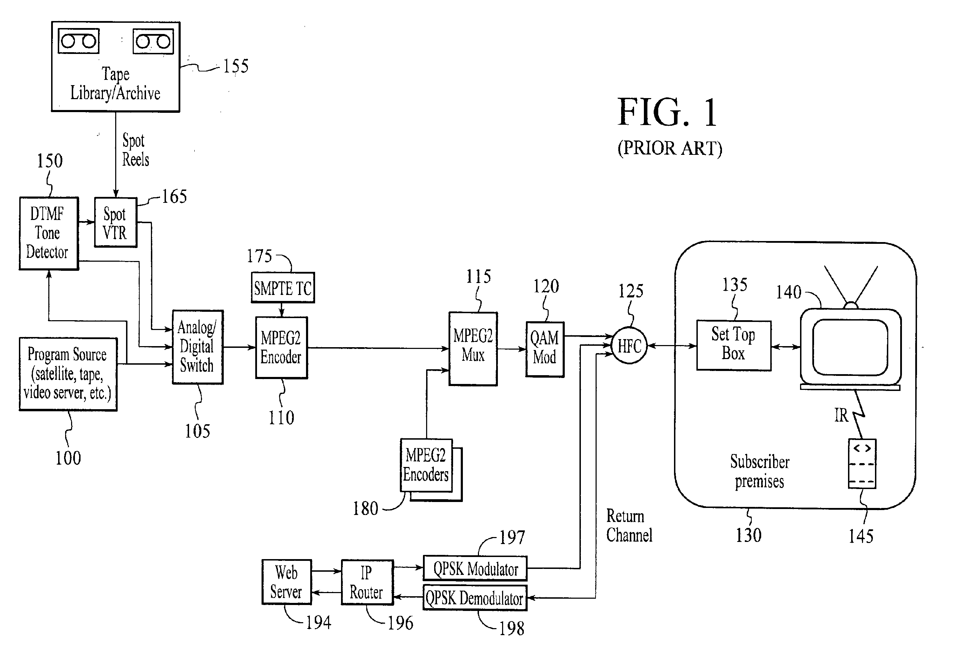

Figure 1 illustrates a standard cable head end system. The source of programming 100 (e.g., satellite feed, tape, video server, etc.) is transferred via an analog/digital switch 105 and compressed and encoded via an MPEG-2 encoder 110. An MPEG-2 MUX (multiplexer) 115 multiplexes the video with the other cable channels fed in by the associated MPEG-2 encoders 180. The multiplexer 115 output, now a single MPEG-2 transport stream, is passed to a QAM (quadrature amplitude modulation) modulator 120 and distributed to subscriber premises 130 via a HFC (hybrid fiber coaxial) network 125. The set top box 135 decodes the MPEG-2 streams and routes the signal to the television receiver 140. The subscriber controls the set top box 135 using an infrared remote control 145 for channel selection.

Cable head ends are commonly configured to provide Internet access. Data from a web server 194 is passed to an IP (internet protocol) router 196 which encapsulates the IP data for modulation 197 and subsequent injection into the HFC network 125. The set top box 135 typically contains a cable modem (not shown) to provide access to the subscriber. HFC technology also enables a data return channel that establishes a route back to the web server 194. The data received from the HFC network 125 is demodulated by a QPSK (Quadrature Phase Shift Keying) demodulator 198, repacketized by the IP router 196 and sent to the web server 194. It is this duplex web connectivity with each individual subscriber via the cable modem that enables interactive applications to function.

Commercial spots are stored in a tape library/archive 155. Spot reels, tapes containing all of the commercials scheduled to air that day, are compiled from spots contained in the library and mounted on a video tape recorder (VTR) 165. When advertising is due to be inserted into the programming, a DTMF tone detector 150 detects the tone associated with ad insertion that is transmitted with the broadcast. The DTMF detector 150 commands the VTR 165 to start playing while simultaneously commanding the analog/digital switch 105 to switch the VTR 165 into the MPEG-2 encoder 110. When the 'return to network' tone is received, the DTMF detector 150 stops the VTR 165 and switches the program source 100 back into the MPEG-2 encoder 180. SMPTE TC 175 provides a house timecode which is used by the MPEG-2 encoder 110 to timestamp the broadcast.

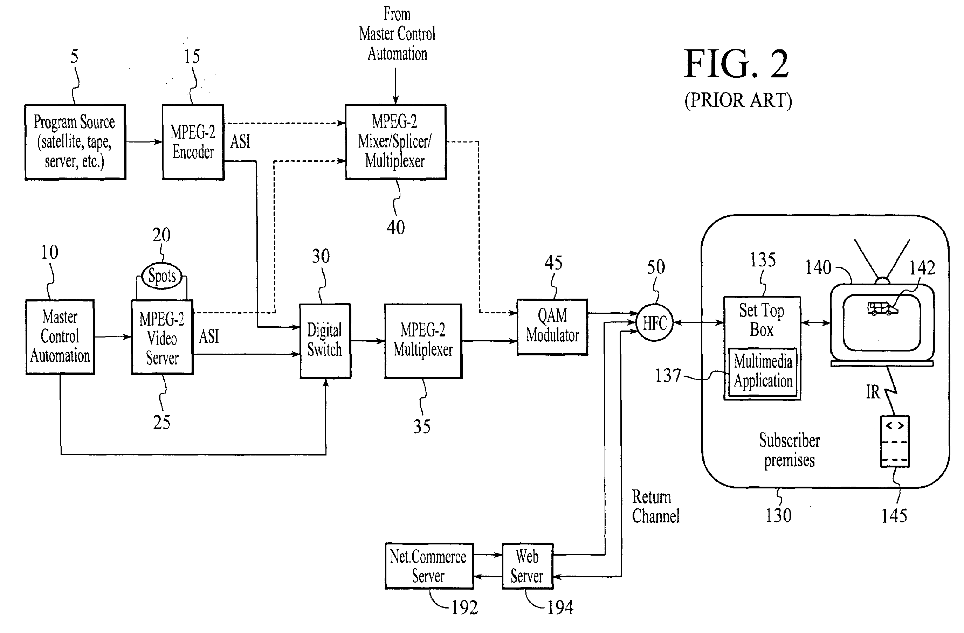

Figure 2 illustrates a prior art e-commerce data embedding system. The embedding of interactive data occurs in a non-interfering manner, such that the multimedia data is synchronized with the commercial's video and audio program. A set of off-line tools are used by advertisers to embed icons 142 and URL link data into the commercial at the appropriate temporal and spatial locations. The format of the commercial video is MPEG-2 compressed data. The e-commerce data is embedded as private user data which is ignored by the video decoder and is extracted by the multimedia application 137 in the set top box 135. The advertiser then designs a set of web pages with which an end user may purchase the advertised item. Upon completion, the web pages are sent to an e-commerce server 192, and the commercial (now modified with embedded data) is stored on the spot storage device 20 at the cable headend to await playout by the MPEG-2 server 25.

For interactive ads, the multimedia application 137 resident in the set top box 135 extracts the embedded data from the MPEG-2 stream and displays or overlays an icon or video hotspot 142 onto the-television screen 140. The end user interacts with the hotspot 142 using the remote control 145. Upon selection, the multimedia application 137 displays a web page on the television screen that corresponds to the hotspot. The web page facilitates either the retrieval of more information related to some object in the commercial or an actual transaction to purchase.

While embedding the multimedia data in the content off-line simplifies the management and insertion of the data, it creates other problems which limit its usefulness. At air time, the video disk must isochronously stream the video file in MPEG-2 format. Decoding the video to analog or Rec. 601 and re-encoding it back into MPEG-2 format for cable insertion, which is currently how cable head-ends operate, would cause the embedded multimedia data to be lost. On-air cable operations call for continuous switching between the cable network feed and locally stored commercials. Cable head-ends operate in the analog or digital domain and specifically do not play out commercials in MPEG-2 compressed format because the commercial spots cannot be cleanly switched in and out on the air stream in the MPEG-2 domain.

This insertion technique is illustrated in Figure 2. The commercial spots 20 with embedded data are stored on an MPEG-2 video server 25 located at the headend. As these spots are periodically played out during scheduled spot insertion, the MPEG-2 server 25 isochronously streams the spot in MPEG-2 DVB/ASI (Digital Video Broadcast/Asychronous Serial Interace) format. The output of the server 25 is sent to an ASI compatible digital switch 30 which removes the network feed received from the MPEG-2 encoder 15, and routes the spot to the MPEG-2 multiplexer 35. Alternately, the server 25 output (shown with dashed lines) may be connected to an MPEG-2 mixer/splicer/multiplexer 40 which performs the equivalent function using MPEG-2 splicing. Neither technique provides clean, frame accurate switching on arbitrary frame boundaries.

Another complication of using MPEG-2 servers to stream the embedded files is the need for more sophisticated playout automation. A master control automation device 10 must be utilized to cue and play the spots in the video server 25 and command the downstream switching 35 40.

Furthermore, during normal headend operation, it is not uncommon for commercials to be truncated (i.e., not played out in its entirety) due to miscue, excessive spot duration or an error in the programming schedule. Prior art multimedia insertion techniques rely on the spot to start playout on the first frame and play out to the end of the spot. If the network feed is switched in before the end of the spot, the multimedia data or video bug may remain visible on the network program.

Yet another disadvantage of embedding multimedia data into MPEG-2 video content is the difficulty of updating the multimedia data. The MPEG-2 files are very large (roughly 15-30 MB per 30 second spot) and it is uneconomical and burdensome for a cable network to redistribute the commercial files to hundreds of affiliate headends each time an advertiser wishes to make changes in the multimedia content.

### SUMMARY OF THE INVENTION

The present invention enables real-time interactive e-commerce transactions over television systems. The invention can make use of the existing analog/digital video infrastructure and can achieve real-time insertion of interactive multimedia components. A method according to a first aspect of the invention includes forming interactive icon data for a program. A time for broadcasting the program during a broadcast is detected. The interactive icon data is then decoded substantially simultaneously with compressed encoding of the advertisement for real-time insertion of the interactive icon data with the program.

According to one embodiment of the present invention, an efficient technique of inserting hotspot data in to advertisements of broadcast television programs is provided. The insertion is performed in a manner that allows real-time reaction to current conditions of advertisement broadcast. Thus, the present invention is a flexible and practical approach to improving e-commerce transactions.

In a second aspect, the invention provides A system for enabling interactive e-commerce transactions over television systems, the system comprising: means for forming interactive icon data for a program; means for detecting a time for broadcasting the program during a broadcast; and means for decoding the interactive icon data substantially simultaneously with compressed encoding of the program for real-time broadcast of the interactive icon data with the program.

### BRIEF DESCRIPTION OF THE DRAWINGS

Preferred embodiments of the invention will now be described in more detail, by way of example, with reference to the accompanying drawings in which:
Figure 1 illustrates a prior art cable headend system.
Figure 2 illustrates a prior art e-commerce data embedding system.
Figure 3 illustrates an e-commerce real-time data embedding system in accordance with the present invention.
Figure 4 illustrates a system for producing the embedded data in accordance with the present invention.

### DETAILED DESCRIPTION OF PREFERRED EMBODIMENTS

### Definitions Section

Program - The continuous presentation of video and audio material selected for viewing and listening by the viewer. A program may be presented in segments to allow the insertion of other program material such as 5 second intersticials or 30 second commercials. A program may include, but is not limited to, advertisements, commercials, spots or the like. The term is inclusive of any type video and audio content of any length.

Multimedia data - Data such as video, graphics, icons, audio, URL addresses, web-related data objects, computer data or computer programs that are used to enable interactivity in a television program. Multimedia data is embedded into the broadcast in a transparent manner and the interactive functions are only available to viewers with a suitably equipped set top box or television receiver. The multimedia data transmitted out-of-band with the program is mixed with or superimposed over the program by an interactive multimedia application.

### Preferred Embodiments

The present invention relates to enabling e-commerce at cable headends. The following description is presented to enable one of ordinary skill in the art to make and use the invention. Various modifications to the preferred embodiment and the generic principles and features described herein will be readily apparent to those skilled in the art. Thus, the present invention is not intended to be limited to the embodiment shown.

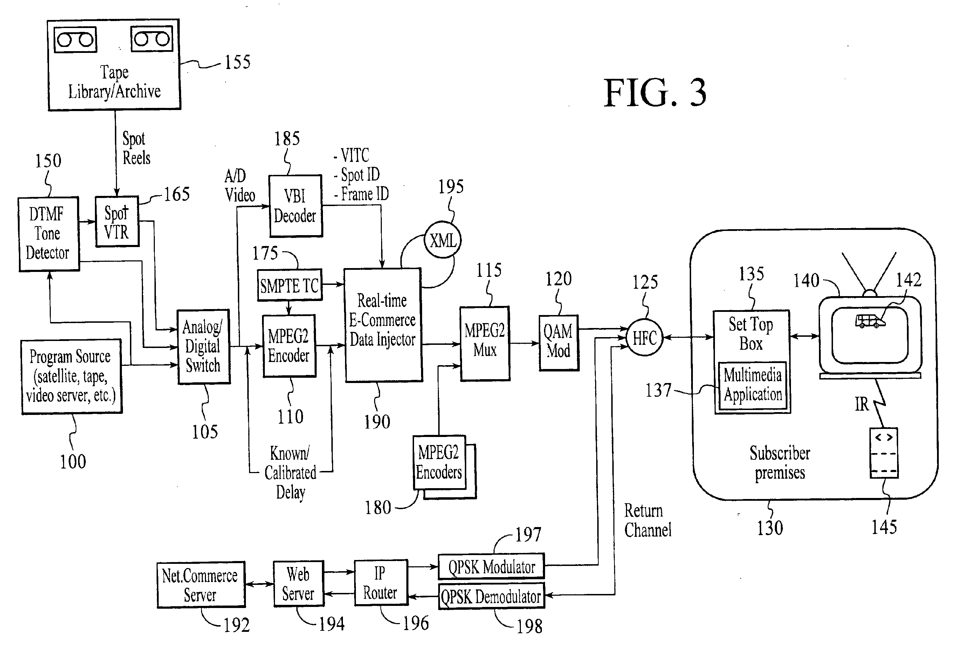

Figure 3 illustrates a real-time e-commerce insertion system in accordance with the present invention, where portions of the cable headend equivalent to that of the prior art are numbered similarly to Figure 1. Referring to Figure 2, the programs such as commercials or the like stored on analog or digital tape are modified such that the spot identifier, duration, and frame identifiers are written into the VBI (vertical blanking interval). The insertion is done via off-line tools to an existing commercial as discussed hereinbelow with reference to Figure 3.

At commercial playout time, usually triggered by the receipt of DTMF tones 150 from the cable network feed 100, the spot VTR 165 is switched into the on-air feed by the analog switch, and the VTR 165 begins to play. As the spot plays out, a VBI decoder 185, sampling the video feed, decodes the identifier (ID) of the spot and the frame IDs, and this information is passed to the real-time injector system 190. The video feed is routed into the MPEG-2 encoder 110 which has a 3-8 frame latency due to the amount of computation necessary to compress high bandwidth, broadcast video. The exact duration of the latency is known from a suitable prior calibration. During this approximate 90-240 millisecond delay, the e-commerce data stored on XML storage device 195 is prefetched and prepared for insertion in to the MPEG-2 transport stream. The real-time injector 190 also takes as input SMPTE linear time code 175, also known as house timecode. House time is noted when the first frame of the commercial spot rolled by, so that by adding the known encoder latency to this timestamp, the time to commence data insertion is known to the exact frame.

The real-time injector 190 monitors the MPEG-2 transport stream and decodes the SMPTE time code stored in the time code field of the GOP (Group of Pictures) header to detect the target start time.

It should be noted that although the commercial tape has its own SMPTE timecode, the tape timecode is generally ignored and the MPEG-2 encoder 110 timestamps its output stream with the house SMPTE timecode 175. However, should the cable headend be configured to pass the SMPTE timecode of the tape, the encoder latency is still used to calculate the start of data insertion.

MPEG-2 is described in detail in the Moving Pictures Expert's Group (MPEG) standard, Coding of Moving Picture and Associated Audio ITU Recommendation H.262 which is incorporated herein by reference.

A GOP is a series of pictures or frames beginning with an I-frame. The I-frame may be followed by a series of B and/or P-frames. The more B-frames that are used, the more efficient the compression at a price of reduced video quality. The IBP sequence and GOP length are a video encoder configuration parameters set by the user according to the requirements of the application.

To enable proper decoding of the B frames, the I, P and B frames are transmitted by the MPEG-2 encoder out of display order. Any I or P frames needed to decode a B frame are sent first. The receiving MPEG-2 decoder reorders the frames after decoding to restore the original frame sequence of the video.

In addition to knowing the encoder latency, the real-time injector 190 also detects whether the encoder is transmitting in out-of-display order. The transmit order is determined by decoding the MPEG-2 picture header of each frame in the compressed stream. This allows the real-time injector 190 to annotate each video frame with its corresponding e-commerce data. The e-commerce application 137 executing in the set top box 135, reorders the e-commerce data, if necessary, to match the display order.

As the commercial plays out, the real-time injector 190 reads the spot ID and the frame ID of every frame for the decoded VBI data. If, at any time, the network feed 100 is switched back into the channel, the real-time injector 190 detects this and ceases data insertion. If the following commercial is miscued and begins to play at, for example, ten seconds into the commercial, this, too, is detected, and the real-time injector 190 injects the data that corresponds to that offset.

Encoding the spot ID and the frame information into the VBI is done for content in either the analog or component/composite digital format. Interactivity is enabled with the mere addition of a real-time injector workstation to the headend infrastructure. The workstation preferably uses an adapter that interfaces with a DVB/ASI (Digital Video Broadcast/Asynchronous Serial Interface) transport stream (270 Mbps).

Using well-known methods of multiplexing data into an MPEG-2 transport stream, the real-time injector 190 reads in the MPEG-2 transport stream data and injects the e-commerce data as private user data using DSM-CC (Digital Storage Media Command and Control) protocols. Adding data to the transport stream requires the real-time injector 190 to recalculate the PCR (program clock reference), PTS (presentation timestamp) and DTS (decode timestamp) clock values, located in the MPEG-2 headers, to preserve proper clock recovery by the decoder.

The modified MPEG-2 transport stream is then sent to the MPEG-2 multiplexer 115. In addition to providing the related URL links and the hotspot image, the injected e-commerce data positively identifies each frame by SMPTE timecode, PTS value, and temporal reference. Should any frame be received without these data or if the CRC, embedded in each e-commerce data packet, fails, or if the frame and e-commerce data mismatch, the multimedia application 137 executing in the set top box 135 ceases to display the video hotspot 142.

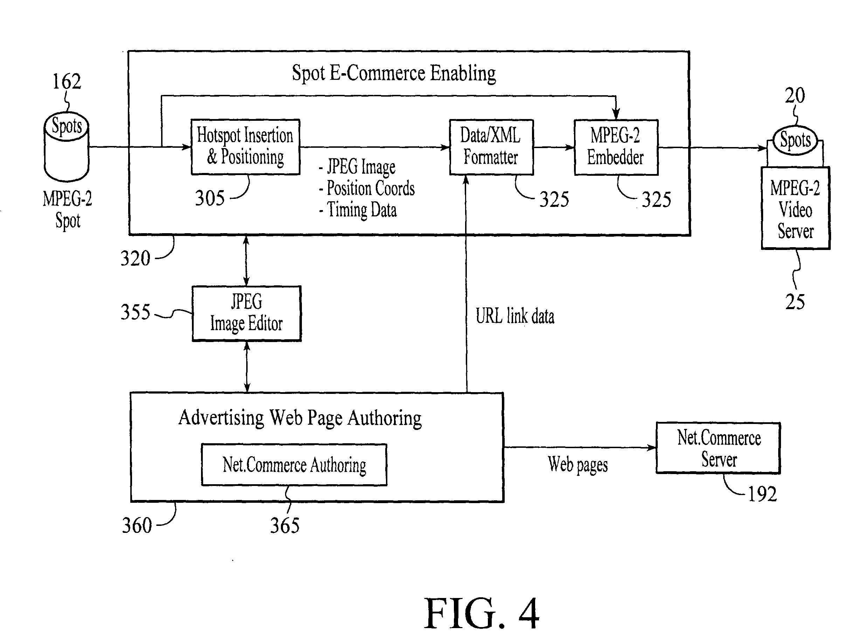

Referring now to Figure 4, off-line formation of the hotspot for insertion includes provision of a spot from ad input VTR 162 to a spot e-commerce enabling system 320. For each frame of the spot, the hotspot/icon to be inserted and its positioning is designated (via 305), which provides the JPEG image of the hotspot/icon, the position coordinates (e.g., x-y coordinates) for the hotspot, and the frame identification information for the hotspot. The data is transferred to a formatter 325. The provision of the JPEG image occurs via a JPEG image editing facility 355 that interacts with a system 360 that authors the webpages, including net commerce authoring facilities 365, associated with the hotspot.

The web address (e.g., URL) for the webpage (e.g., stored on net commerce server 192) is provided to the data/XML formatter 325 in order to include the address with the hotspot. Mass storage device (XML) 195 suitably stores the JPEG image for the hotspot, the position coordinates, frame identifiers, and URL links for retrieval by the real time injector 190 at air-time. A VBI encoder 340 encodes and inserts the frame and spot identification into the VBI of each frame/field. The active video is written to tape 165 unaltered 315. The updated spot tape is then distributed to headend tape/library archives 155.

A system and method in accordance with the present invention provides a plurality of advantages over prior art techniques. The commercial spot contains no multimedia data and the VBI requires annotation only once. Thereafter, advertisers may continuously change the multimedia and URL data without having to modify the spot. Further, the multimedia data resides in an XML formatted file that is orders of magnitude smaller than the annotated MPEG-2 file described in prior art.

The XML file can be rapidly downloaded to the affiliate headends over low speed dial lines. This ease of distribution allows advertisers to make changes in multimedia content much closer to air-time than was previously possible. Moreover, it offers the advertiser the flexibility to target viewers on a regional or demographic basis by customizing the multimedia data for selected headends.

In a preferred embodiment, the XML storage device 195 additionally stores scheduling information that directs the real-time injector 190 to use one of many XML files that are associated with the same spot. Lastly, the need for master control automation for controlling the playout of the interactive content is obviated because MPEG-2 servers and/or MPEG-2 switching devices are not utilized. The technique of enabling the interactivity of video described herein has been illustrated using commercial spots. The present invention, however, is not limited to video content of any duration or subject matter.

## Claims

1. A method for enabling real-time interactive e-commerce transactions over television systems, the method comprising:
forming interactive icon data for a program;
detecting a time for broadcasting the program during a broadcast; and
decoding the interactive icon data substantially simultaneously with compressed encoding of the program for real-time insertion of the interactive icon data with the program.

2. The method of claim 1 wherein forming further comprises providing a web page and linking an icon to the web page.

3. The method of claim 2 wherein linking further comprises determining a frame number and position coordinate for the icon for each frame of the program.

4. The method of any one of claims 1 to 3 further comprising encoding an identifier for the program and each frame in the vertical blanking interval of each frame of the program.

5. The method of any one of the preceding claims wherein decoding further comprises decoding an identifier for the program and frame, retrieving the interactive icon data from storage based on the program and frame identifier, and inserting the interactive icon data into the compressed encoded program.

6. The method of any one of the preceding claims wherein multiple instances of interactive icon data for a program are formed and each instance is unique.

7. The method of claim 6 wherein the instance of interactive icon data retrieved is based on schedule or geographic location.

8. The method of claim 5 wherein decoding and retrieving occur during a predetermined delay in an MPEG-2 encoder for the compressed encoding of the program.

9. A method for providing interactive e-commerce data, the method comprising:
identifying insertion locations of interactive icon data in a program; and
providing the insertion location in a vertical blanking interval (VBI) of the program.

10. The method of claim 9 further comprising providing a program identifier in the VBI.

11. The method of claim 9 or claim 10 wherein providing insertion locations further comprises providing insertion locations as frame numbers of the program.

12. The method of claim 10 further comprising utilizing the program identifier to retrieve the interactive icon data.

13. The method of claim 9 further comprising utilizing the insertion locations to insert the interactive icon data into the program.

14. The method of claim 9 further comprising utilizing the insertion locations substantially simultaneously with compressed encoding of the program.

15. A system for enabling interactive e-commerce transactions over television systems, the system comprising:
means for forming interactive icon data for a program;
means for detecting a time for broadcasting the program during a broadcast; and
means for decoding the interactive icon data substantially simultaneously with compressed encoding of the program for real-time broadcast of the interactive icon data with the program.

16. The system of claim 15 wherein the means for forming further provides a web page and links at least one icon to the web page.

17. The system of claim 16 wherein the means for forming further links an icon by determining a frame number and position coordinate for the icon for each frame of the program.

18. The system of any one of claims 15 to 17 further comprising means for encoding an identifier for the program in a vertical blanking interval of the program.

19. The system of any one of claims 15 to 18 wherein the means for decoding further decodes an identifier for the program, retrieves the interactive icon data from storage based on the identifier, and inserts data from the interactive icon data into the compressed encoded program.

20. The system of claim 19 wherein the means for detecting decodes and retrieves during a predetermined delay in an MPEG-2 encoder for the compressed encoding of the program.
